# EUROPEAN PATENT SPECIFICATION

(11) **EP 1 397 931 B1**
(45) Date of publication and mention of the grant of the patent: **22.04.2009**
(21) Application number: 02700297.1
(22) Date of filing: 15.02.2002
(51) Int. Cl.: H04M 15/00

(54) **SYSTEM, METHOD AND NETWORK NODE FOR PROVIDING SERVICE-SPECIFIC BILLING IN A TELECOMMUNICATIONS SYSTEM**
SYSTEM, VERFAHREN UND NETZWERKKNOTEN ZUR BEREITSTELLUNG EINER DIENSTSPEZIFISCHEN GEBÜHRENBERECHNUNG IN EINEM TELEKOMMUNIKATIONSSYSTEM
SYSTEME, PROCEDE ET NOEUD POUR LA FOURNITURE DE FACTURATION SPECIFIQUE DE SERVICE DANS UN SYSTEME DE TELECOMMUNICATIONS

(30) Priority: 16.02.2001 FI 20010302
(43) Date of publication of application: 17.03.2004
(73) Proprietor: TeliaSonera Finland Oyj, 00510 Helsinki (FI)
(72) Inventor: YLI-KORHONEN, Jukka, FIN-90120 Oulu (FI); JUNTUNEN, Ari, FIN-90520 Oulu (FI); KEINÄNEN, Kimmo, FIN-90500 Oulu (FI)
(74) Representative: Äkräs, Tapio Juhani
(86) International application number: PCT/FI2002/000128
(87) International publication number: WO 2002/067616

(56) References cited:
- WO-A1-00/65812
- WO-A2-01/33456
- WO-A2-01/91003
- US-A- 5 982 864
- US-A- 6 047 051

## Description

### FIELD OF THE INVENTION

The invention relates to billing for a service transmitted in a telecommunications system, and particularly to providing service-specific billing,

### BACKGROUND OF THE INVENTION

Services provided in telecommunications systems are more and more often produced in a multi-provider environment, where a network operator provides bearer services and one or more service providers provide the actual services. A service provider does not maintain a network but purchases the required bearer services from the network operator. Thus, the total price of a service is a combination of the price of the connection and the price of the actual service or content. Even in a multi-provider environment the best way to charge a client is that the network operator attends to authentication and billing of the user of the service according to the user's phone number also on behalf of the service provider. An actual bill is based on billing data transmitted by the service provider in a service response, and collected and processed by a billing data cotJectirM system of the network operator.

US 5 982 864 relates to customer-specific billing information added to a bill and discloses how a subscriber can receive similar kind of billing information regardless of what kind of service he has used.

A problem with such billing is that the operator and the service provider must have accurate contracts concerning the content and structure of the billing data in order that a service could be billed for in the way the service provider wants. In case of a large number of service providers, the network operator does not necessarily have time or is not able to agree in detail on the contents of the billing data with each service provider, which means that either the introduction of a service into the market will be delayed, or the service provider must arrange billing in some other manner or use an existing billing method, which may not be the best for the service in question.

### BRIEF DESCRIPTION OF THE INVENTION

An objective of the invention is to develop a method and equipment implementing the method so as to solve the aforementioned problems. The objective of the invention is achieved by a method, system and network nodes, which are characterized by what is disclosed in the independent claims. The preferred embodiments of the invention are disclosed in the dependent claims.

The invention is based on detecting this problem and on solving it by providing a system of a network operator, preferably a system for process-ing billing data, with a mechanism for informing the network operator of the form in which the billing data should be disclosed. The mechanism is preferably created by determining rules for defining billing parameters and by determining, by means of these rules, a billing content of a service, which is available to the network operator when forming a call detail record, and by storing the billing content in the system so as to be available to a process producing tickets. A billing content determines the service-specific parameters used in a call detail record, i.e. a ticket, and indicates how to locate the parameters in the billing data. The processing system can constitute a part of the system for collecting billing data.

An advantage of the invention is the ability to transmit and process billing data, which has different contents for different services since the billing parameters can be freely selected. Another advantage of the invention is that no specific service contract is needed between the network operator and the service provider, since the invention enables determining the structure of the billing data in such a manner that the network operator's system identifies the billing parameters and their values. Therefore the operator can provide user authentication and billing services globally to service providers. This even enables billing for free browsing, where a user is able to use all the services and not only the services of the operator or partners thereof.

### BRIEF DESCRIPTION OF THE FIGURES

The invention will be described below in more detail by means of the preferred embodiments and with reference to the accompanying drawings, in which
Figure 1 shows a simplified network architecture,
Figure 2 shows an example of determining a billing content according to a first preferred embodiment of the invention,
Figure 3 shows formation of a ticket according to the first preferred embodiment of the invention, and
Figure 4 shows an example of a ticket according to the first preferred embodiment of the invention.

### DETAILED DESCRIPTION OF THE INVENTION

The present invention can be applied in connection with any telecommunications system where the data required for billing a subscriber is transmitted together with service data. Such systems include for example third-generation mobile systems, such as the Universal Mobile Telecommunications System (UMTS), and mobile systems similar to the pan-European GSM (Global System for Mobile Communications), such as the GSM 1800 and the PCS (Personal Communication System), and systems based on the aforementioned systems, such as GSM 2+ systems. GSM 2+ services include the general packet radio service (GPRS) and customized applications for mobile network enhanced logic (CAMEL). The invention can also be applied in fixed systems. The invention will be described below by using as an example the GSM providing a WAP (Wireless Application Protocol) service, without restricting the invention thereto, however. The WAP is a protocol specification that enables apparatuses utilizing wireless data transmission, such as mobile phones, to use Internet services.

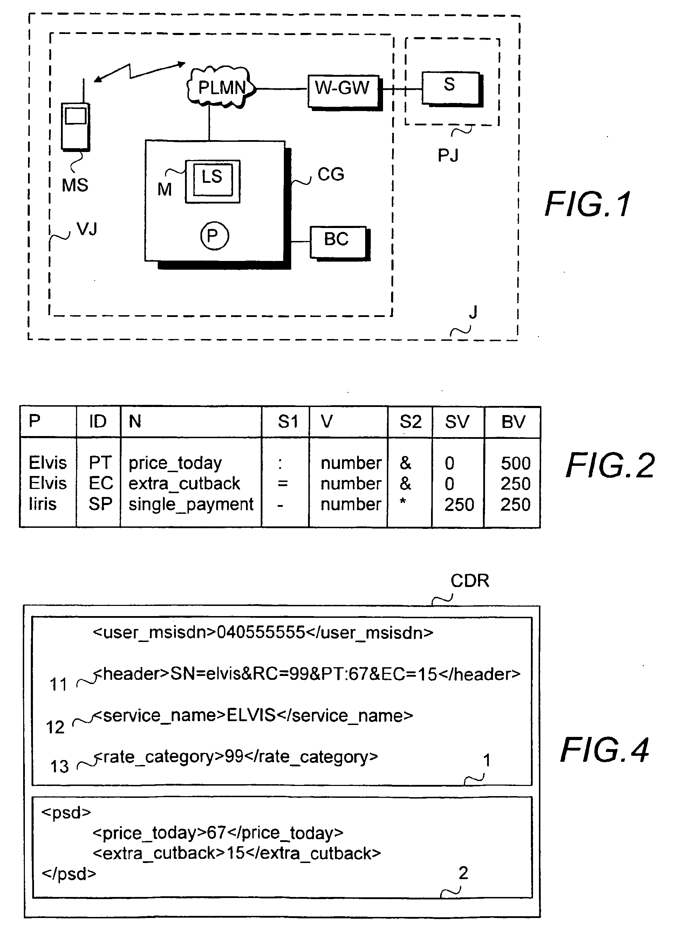

Figure 1 shows a simplified network architecture of a first preferred embodiment of the invention, and it illustrates only some elements of a system architecture J. Network nodes shown in Figure 1 are logical units, the implementation of which can differ from that of the figure. It is obvious to a person skilled in the art that the system can also comprise other functions and structures, which do not have to be described in more detail herein. The description of the system is by no means restrictive but only suggestive.

The system shown in Figure 1 consists of a system of a network operator VJ and a system of a service provider PJ. In the example of Figure 1, a mobile station MS user has set up a connection to a server S providing a WAP service via the network operator's network PLMN via a WAP gateway W_GW in a previously known manner. In the first preferred embodiment of the invention, the WAP gateway W_GW picks the billing data from a service response transmitted by the server and stores it in a log file, which is retrieved by a charging gateway CG connected to the network operator's network PLMN and which is processed into call detail records, i.e. tickets. An example of a ticket is shown in Figure 4. The tickets are then transmitted to a billing centre BC, which attends to billing of a user. The picking of billing data refers to picking of data used to form a ticket, such as a part of the service response containing the data required in billing. In a service response, billing data can be located for example in an HTTP (Hyper Text Transport Protocol) header. In another embodiment of the invention, the WAP gateway W_GW does not store the billing-related data that was picked into a log file but transmits the data to the charging gateway CG for example via a real-time interface. The details of the billing, e.g. how billing data is transmitted, collected and retrieved and where it is stored, are not significant for the invention. For example, arranging billing for the WAP service is described in more detail in Finnish Patent Application 20000589 (Arranging billing in a telecommunications system), which is incorporated herein by reference.

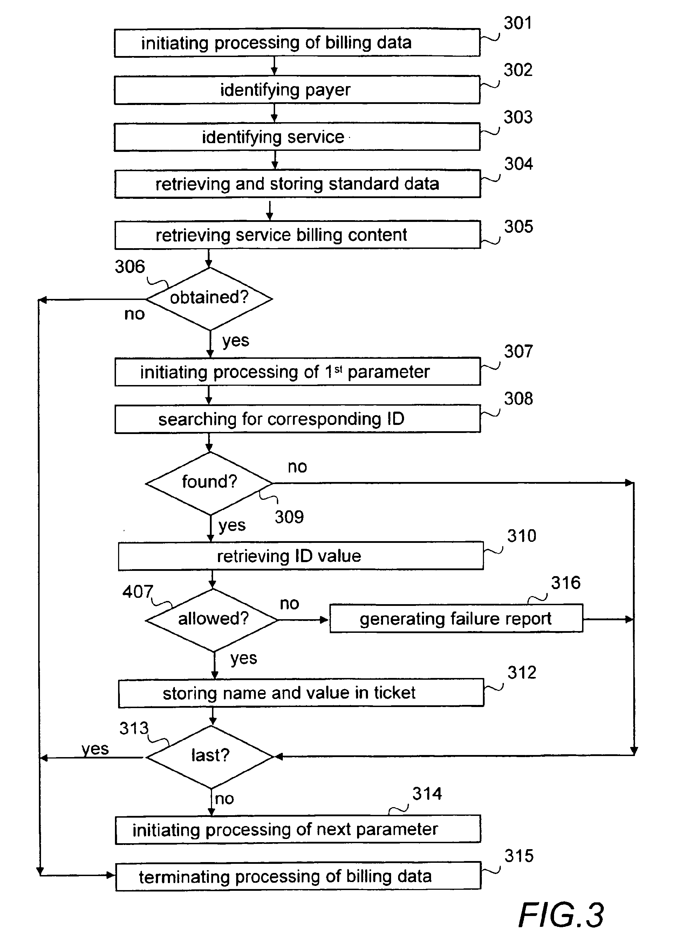

The charging gateway CG comprises an interface I, via which service-specific billing contents LS can be determined in the charging gateway. Examples of such billing contents are shown in Figure 2. The interface I thus provides configuring means for determining the content and structure of the billing data and the ticket and for storing them by means of the definition rules for billing parameters. Billing contents are preferably stored in a memory M of the charging gateway. The network operator has usually determined the definition rules and the service provider determines the actual billing content of the service, i.e. it determines the required parameters and provides parameter specifications. The actual billing content is input/processed into the memory M of the charging gateway via the interface I by the operator or the service provider, depending on their mutual agreement. The interface I can also be arranged to check, in connection with the input or processing of the billing content, that the parameter specifications comply with the definition rules. The definition rules are preferably the same for all the service providers, but the network operator can also customize the rules separately for each service provider. Inputting billing contents does not preferably require a service contract between the service provider and the network operator, but the service provider may be able to input billing contents for example via the Internet after having accepted certain rules and passed a log-in process. The charging gateway CG also comprises processing means, i.e. a process P, which converts the billing data into a ticket by means of the billing content specified for the service. The operation of the process P will be described in more detail in connection with Figure 3.

Depending on the embodiment, the interface I can be located in a different network node than the stored billing contents LS. Neither has to be located in the charging gateway. A network node where the billing contents LS are stored comprises means for receiving requests on billing contents and means for processing and transmitting responses.

In addition to prior art means, a system implementing the functionality of the present invention and the network nodes of the system comprise means for creating and storing service-specific billing contents. The system and the network nodes can also comprise means for processing a billing content. The means are preferably implemented by using the present network nodes, especially the processors and memory thereof. All the modifications required to implement the invention can be carried out in the form of added or updated software routines, application-specific integrated circuits (ASIC) and/or programmable circuits.

Figure 2 shows a manner according to the first preferred embodiment of the invention of determining service-specific billing contents stored in a database table where each service-specific parameter to be taken into account in billing is provided with required data, i.e. the parameters are determined according to the definition rules. It is assumed in the first preferred embodiment of the invention that a billing ticket consists of standard data and service-specific data. Parameters for the standard data are determined generally in the first preferred embodiment, i.e. they are shared by all services. Such standard data includes for example user identifier, service name, service status data, and time. Standard data or some part of it can be transmitted with service-specific billing data, but for example in case of WAP services they are usually obtained in some other manner. Service-specific data is determined in the billing content of a service. The parameters that should be or may be specified in the billing content naturally depend on the operator, the billing system used by the operator, and the form in which billing data is transmitted. These matters are described in the definition rules. The essential fact in the billing content of an individual service is that it can be connected to a specific service and that at least one billing parameter is determined in such a manner that the billing parameter and the value thereof can be somehow separated from the billing data. However, in the first preferred embodiment of the invention it is not necessary to determine a billing content for all the services if standard data is sufficient to bill for a service.

In the example shown in Figure 2, it is assumed for the sake of clarity that the service name identifies the service sufficiently, i.e. the service cannot be confused with any other service, and different service providers do not have services with similar names. In embodiments where a mere service name does not identify a service sufficiently accurately, a service to be billed for can be identified for example based on the names of both the service provider and the service.

In the first preferred embodiment of the invention, the definition rules do not restrict in any way the ability of service providers to determine the parameters to be taken into account in billing, and the only requirement is that each parameter of a service billing content is provided with not only a name N but also the following data:
- The service P to which the parameter is related. A parameter defined by means of a service can be connected to the service billing content,
- A parameter identifier ID used in billing data to help locate the parameter and the value thereof,
- A separator S1 between an identifier and the value thereof in the billing data,
- Value type V,
- The allowed range of variation of the value indicated by means of the lowest value SV and the highest value GV, and
- A separator S2 between the identifiers.

On the basis of this data, a single ticket may contain 1 to n items of service-specific billing data, which are mutually independent. The billing data can even consist of data not used by the network operator in its own billing. For example based on the specifications shown in Figure 2, a ticket formed of a service called 'Elvis' contains the billing value of two parameters in the service-specific data, and a ticket formed of a service called 'liris' contains the billing value of one parameter. The same parameter can also be used in different services and with different ranges of variation. Eliminating parameters from or adding new parameters into a service is easy and simple in the first preferred embodiment of the invention. It is also easy and simple to alter parameter specifications, for example to update the allowed range of variation.

In a preferred embodiment of the invention, the operator can restrict parameter specifications for example by limiting the maximum number of parameters used in one service or by restricting the allowed value types to numbers only. The operator can also determine its own set of billing parameters, which it offers to service providers. The service providers then select from the set of billing parameters the parameters they want to use in billing for each service.

In a preferred embodiment of the invention, parameters and their values to be used in standard data are also specified in the billing content of each service. In this way standard data can also be configured specifically for each service/service provider.

In another preferred embodiment of the invention, a common billing content is also determined and used for services with no specified billing content of their own. A common billing content can also be determined specifically for each service provider and/or service type. If a service-type-specific billing content is used, the service type is indicated in a service response either directly or indirectly in order that the correct billing content can be selected when forming a ticket. The same applies to service-provider-specific billing contents as well. The service type can be concluded for example based on the service when the system maintains data that links each service to a service type.

In a preferred embodiment of the invention, also a broader description of a parameter, such as the manner of use or the meaning in billing, can be stored in the billing content.

In another preferred embodiment of the invention, several different identifiers with different value ranges can be stored for one parameter in a billing content. In this embodiment, only one such identifier is shown in the billing data.

If the highest allowed value of the identifiers is equal to the lowest allowed value, in a preferred embodiment of the invention the billing data does not have to contain a value for the parameter, but it is possible to use the value determined in the billing content when forming a ticket.

In the other embodiments of the invention, the predetermined definition rules can differ from what is shown in Figure 2. It is sufficient that the definition rules ensure that the parameters in the billing content are known and that they will be found from the billing data.

Figure 3 shows a flowchart of how a ticket (or a part thereof, if one ticket combines the billing data of several service responses) is formed according to the first preferred embodiment of the invention from the billing data in the service response. It is assumed in the example of Figure 3 that the service provider has transmitted billing data or that the billing data field is not empty. An empty billing data field is preferably not processed at all. The example of Figure 3 does not determine at which stage the tickets should be transmitted to the billing centre. In the first preferred embodiment of the invention, service-specific billing data is transmitted in HTTP headers of a service response. Transmitting billing data as a part of an HTTP header has an advantage that the data is not transmitted from the gateway, such as the WAP gateway, to the subscriber of the service. Furthermore, an HTTP header is an efficient channel of data transmission between a service provider and an operator.

Since it is not significant for the invention how the billing data is found for example from a log file, the starting point of Figure 3 is that in step 301 the processing of billing data is initiated. For example in the first preferred embodiment of the invention, the WAP gateway picks the billing data from the HTTP header of the service response for the WAP service on the basis of a carriage return. An example of billing data will be described below. The payer is identified first in step 302. The payer can be for example the end user or the service provider, such as a service provider providing a commercial WAP/SMS push service. A payer is identified according to the system used. In the present WAP services, a user is identified based on a phone number received during the set-up of the connection. In the future third-generation mobile systems and in general Internet-based services, the end user can be identified for example from the service log-in data transmitted by the service provider. It is also possible to identify both the payer and the user. After the payer has been identified, the service to which the billing data is related is identified in step 303. The service can be identified either directly by means of an identifier indicating the service name in the HTTP header, or by means of an analysis of a URL (Uniform Resource Locator) address. After the service has been identified, the standard data is retrieved from the billing data and stored (or the part of the standard data not received via some other route/earlier) in a ticket in step 304, and the service billing content is retrieved in step 305. The service billing content is retrieved in the first preferred embodiment of the invention by checking the database table shown in Figure 2 and by picking all the parameters with their specifications that relate to the service to be billed for. In step 306, it is checked whether a billing content was obtained. In other words, it is checked whether a billing content has been specified for the service. If a billing content was obtained (i.e. has been specified), the processing of the first parameter is initiated in step 307 and a corresponding identifier is retrieved from the HTTP header in step 308. If such an identifier was found (step 309), the value given for the identifier is retrieved in step 310. It is thereafter checked in step 311 whether the value is allowed, i.e. whether it is within predetermined limits and of a specified type. If the value was allowed, the parameter name and value are stored in the ticket in step 312, and it is checked in step 313 whether the parameter was the last parameter of the billing content. If the parameter was not the last one, the next parameter is subjected to processing in step 314, whereafter the process proceeds from step 308 by searching the HTTP header for the corresponding identifier.

If the parameter was the last one (step 313), the processing of the billing data is terminated in step 315.

If the parameter value was not allowed (step 311), a failure report is generated to the system in step 316, and the ticket field in question is left empty. After the failure report has been generated, the process proceeds to step 313 to check whether the processed parameter was the last one in the billing content.

If a parameter identifier was not located (step 309), the process proceeds to the last step 313 to check whether the processed parameter was the last parameter in the billing content. In other words, it is assumed in the first preferred embodiment of the invention that this time the service provider did not want to use this parameter for billing. Such a parameter can be for example an additional discount parameter.

If a billing content was not obtained (step 306), it has not been determined for the service, wherefore the processing of the billing data is terminated in step 315.

In a preferred embodiment of the invention, at least some of the parameter specifications of the standard data are contained in the service billing content. In this embodiment, the billing content must be retrieved (step 306) before step 304, i.e. the retrieval and storage of the standard data.

In a preferred embodiment of the invention, all the parameters, including the parameters of the standard data transmitted in the billing data, such as a service identifier, are determined at least specifically for each service provider. In this embodiment, the processing of the billing data is initiated by first identifying the service provider, whereafter the database table is checked in order to retrieve the service-provider-specific parameters, such as a service identifier and possibly at least some of the standard data. After the service has been identified, the parameters specified for the service are retrieved. This provides the billing content, and the parameter values thereof are retrieved in the manner described above.

The steps of Figure 3 are not in an absolute order of time. Some of the aforementioned steps can take place simultaneously or in another order, such as steps 304 and 305. Some steps can be skipped, or steps not shown in Figure 3 can be implemented between the steps. Some steps can also be replaced with a corresponding step. For example in an embodiment where the log file only comprises notes containing billing data and where a service-type-specific billing content is used for each service, step 306 can be skipped and step 303 can be replaced with a step of identifying the service type.

Figure 4 shows an xml (eXtendable Mark up Language) ticket CDR according to the first preferred embodiment of the invention, where the WAP service 'Elvis' has been subscribed to from mobile phone number 040555555. The billing content of the service has been specified as shown in Figure 2 and the billing data is indicated as follows in the HTTP header of the service response:
X-up-billing-Info:SN=elvis&PT:67&EC=15

In the first preferred embodiment, the ticket comprises standard data -1 and a part 2 that changes according to the service. The service-specific part 2 is determined according to the billing content defined for the service. In the first preferred embodiment of the invention, the standard data 1 includes a calling party identifier 11, billing data 12 in the HTTP header, a service name 13, and a service price class 14, which is used to distribute different services of the same service provider to different price classes. The standard data is followed by the changing part 2 of the ticket, which is not found in tickets related to a service for which a billing content has not been specified. By means of the definitions shown in Figure 2, the process forming a ticket is able to retrieve from the billing data an identifier and a value corresponding to each parameter specified for the service 'Elvis'.

Even though the above description relates to the use of the billing content for altering a ticket, it can also be applied to other functions related to billing, such as selecting what to store in a log file.

It is obvious to a person skilled in the art that as the technology develops, the basic idea of the invention can be implemented in several manners. The embodiments of the invention described above or the individual characteristics thereof can be combined to provide new embodiments. Thus, the invention and the embodiments thereof are not restricted to the above examples, but they may vary within the scope of the claims.

## Claims

1. A method of providing service-specific billing in a telecommunications system, where a system of a network operator transmits services of at least one service provider to a subscriber, and forms call detail records to be used in billing and containing at least one billing parameter and the value thereof, **characterized in that** the method comprises at least the following steps of:
determining rules for defining billing parameters,
determining, by means of the definition rules, a billing content for at least one service, the content containing at least one service-specific billing parameter and indicating how the parameter is found from billing data transmitted during the use of the service, and
storing the billing content in the telecommunications system such that it is available to the system of the network operator.

2. A method according to claim 1, **characterized in that** the method also comprises a step of forming, from the billing data, a call detail record, which contains at least a service-specific part comprising service-specific billing parameters and their values defined in the billing content.

3. A method according to claim 1 or 2, **characterized in that** the method also comprises the steps of
determining at least one set of billing parameters, and
selecting the billing parameters to be used in the billing content from the set of billing parameters.

4. A method according to claim 1, 2 or 3, **characterized by** determining a billing content for one service.

5. A method according to claim 1, 2 or 3, **characterized by** determining a billing content for a service type, and indicating the service type in the billing data.

6. A telecommunications system (J) comprising
a system of a service provider (PJ) for transmitting at least one service to a subscriber and for providing billing data related to the service, and
a system of a network operator (VJ) for transmitting the service from the service provider's system to the subscriber of the service, and for providing a call detail record to be used in billing of the subscriber by means of the billing data, and
a memory (M) for storing different specifications,
**characterized in that**
the system of the network operator (VJ) comprises an interface (I) for storing in the memory (M) a service-specific billing content (LS), that determines at least one service-specific billing parameter of the billing data according to predetermined definition rules, and indicates how to find the billing parameter from the billing data.

7. A system according to claim 6, **characterized in that** the system of the network operator (VJ) is arranged to utilize the specifications of the billing content in forming a call detail record from the billing data related to the service.

8. A system according to claim 6, **characterized in that** the system of the network operator (VJ) is arranged to form a call detail record (CDR) for the service from standard data (1) containing the same parameters for all the services, and from service-specific data (2) according to the billing content defined for the service.

9. A system according to claim 6, 7 or 8, **characterized in that** the interface (I) is also arranged to alter the specifications of the billing content.

10. A system according to claim 6, 7, 8 or 9, **characterized in that** the interface (I) is also arranged to check, in connection with said storage, whether the parameter specifications comply with the definition rules.

11. A system according to claim 6, 7, 8, 9 or 10, **characterized in that** the system (J) is based on a GPRS system.

12. A system according to claim 6, 7, 8, 9 or 10, **characterized in that** the system (J) is based on a UMTS.

13. A network node (CG) in a telecommunications system where a system of a network operator is arranged to transmit services of at least one service provider to a subscriber and to provide call detail records used in billing, and where the service provider is arranged to transmit billing data in connection with a service,
**characterized in that**
the network node comprises configuring means (I) for specifying parameters contained in the service billing data by means of predetermined definition rules in such a way that the parameter specifications are usable for forming a call detail record related to the service.

14. A network node according to claim 13, **characterized in that** the configuring means (I) are arranged to alter the parameter specifications.

15. A network node according to claim 13 or 14, **characterized in that** the network node also comprises processing means (P) for forming a call detail record from the billing data related to the service, such that at least a part of the call detail record is formed according to the parameter specifications for the service.

16. A network node (CG) in a telecommunications system, where a system of a network operator is arranged to transmit services of at least one service provider to a subscriber, and where the service provider is arranged to transmit billing data in connection with a service, the network node comprising processing means (P) for forming a call detail record from the billing data related to the service,
**characterized in that**
the processing means (P) are arranged to
retrieve a service-specific billing content containing at least service-specific billing parameters specified according to predetermined definition rules, and indicating how the parameters can be found from the billing data, and
to form a call detail record in such a manner that at least a part of the call detail record complies with the billing content.

17. A network node (CG) according to any one of claims 13 to 16, **characterized in that** the means (I, P) are implemented by software routines.

## Patentansprüche

1. Verfahren zur Bereitstellung einer dienstspezifischen Gebührenberechnung in einem Telekommunikationssystem, wo ein System eines Netzbetreibers Dienste zumindest eines Dienstanbieters einem Teilnehmer überträgt und in Gebührenberechnung einzusetzende Gebührendatensätze bildet, die zumindest einen Gebührenberechnungsparameter und dessen Wert enthalten, **dadurch gekennzeichnet, dass** das Verfahren zumindest die folgenden Schritte aufweist:
Bestimmen von Regeln zum Definieren von Gebührenberechnungsparametern,
Bestimmen eines Gebührenberechnungsinhalts für zumindest einen Dienst anhand der Definitionsregeln, wobei der Inhalt zumindest einen dienstspezifischen Gebührenberechnungsparameter enthält und indiziert, wie der Parameter aus während der Anwendung des Dienstes übertragenen Gebührenberechnungsdaten gefunden wird, und
Speichern des Gebührenberechnungsinhalts im Telekommunikationssystem, so dass er dem System des Netzbetreibers zur Verfügung steht.

2. Verfahren nach Anspruch 1, **dadurch gekennzeichnet, dass** das Verfahren ferner einen Schritt aufweist, in dem aus den Gebührenberechnungsdaten ein Gebührendatensatz gebildet wird, der zumindest einen dienstspezifischen Teil enthält, der im Gebührenberechnungsinhalt definierte dienstspezifische Gebührenberechnungsparameter und deren Werte aufweist.

3. Verfahren nach Anspruch 1 oder 2, **dadurch gekennzeichnet, dass** das Verfahren auch die Schritte aufweist:
Bestimmen zumindest einer Menge von Gebührenberechnungsparametern und
Auswählen der im Gebührenberechnungsinhalt einzusetzenden Gebührenberechnungsparameter aus der Menge von Gebührenberechnungsparametern.

4. Verfahren nach Anspruch 1, 2 oder 3, **gekennzeichnet durch** Bestimmen eines Gebührenberechnungsinhalts für einen Dienst.

5. Verfahren nach Anspruch 1, 2 oder 3, **gekennzeichnet durch** Bestimmen eines Gebührenberechnungsinhalts für einen Diensttyp und Indizieren des Diensttyps in den Gebührenberechnungsdaten.

6. Telekommunikationssystem (J) mit:
einem System eines Dienstanbieters (PJ) zum Übertragen zumindest eines Dienstes zu einem Teilnehmer und zum Bereitstellen von zu dem Dienst gehörenden Gebührenberechnungsdaten, und
einem System eines Netzbetreibers (VJ) zum Übertragen des Dienstes vom System des Dienstanbieters zum Dienstteilnehmer und zum Bereitstellen eines beim Berechnen des Teilnehmers einzusetzenden Gebührendatensatzes anhand der Gebührenberechnungsdaten, und
einem Speicher (M) zum Speichern von unterschiedlichen Spezifikationen,
**dadurch gekennzeichnet, dass**
das System des Netzbetreibers (VJ) eine Schnittstelle (I) zum Speichern eines dienstspezifischen Gebührenberechnungsinhalts (LS) im Speicher (M) aufweist, welcher Inhalt zumindest einen dienstspezifischen Gebührenberechnungsparameter der Gebührenberechungsdaten gemäß vorbestimmten Definitionsregeln bestimmt und indiziert, wie der Gebührenberechnungsparameter aus den Gebührenberechungsdaten gefunden wird.

7. System nach Anspruch 6, **dadurch gekennzeichnet, dass** das System des Netzbetreibers (VJ) vorgesehen ist, die Spezifikationen des Gebührenberechnungsinhalts zu benutzen, wenn ein Gebührendatensatz aus den zu dem Dienst gehörenden Gebührenberechnungsdaten gebildet wird.

8. System nach Anspruch 6, **dadurch gekennzeichnet, dass** das System des Netzbetreibers (VJ) vorgesehen ist, einen Gebührendatensatz (CDR) für den Dienst aus für alle Dienste dieselben Parameter enthaltenden Standarddaten (1) und aus dienstspezifischen Daten (2) gemäß dem für den Dienst definierten Gebührenberechnungsinhalt zu bilden.

9. System nach Anspruch 6, 7 oder 8, **dadurch gekennzeichnet, dass** die Schnittstelle (I) auch vorgesehen ist, die Spezifikationen des Gebührenberechnungsinhalts zu ändern.

10. System nach Anspruch 6, 7, 8 oder 9, **dadurch gekennzeichnet, dass** die Schnittstelle (I) auch vorgesehen ist, in Zusammenhang mit dem besagten Speichern zu prüfen, ob die Parameterspezifikationen den Definitionsregeln entsprechen.

11. System nach Anspruch 6, 7, 8, 9 oder 10, **dadurch gekennzeichnet, dass** das System (J) auf einem GPRS-System basiert.

12. System nach Anspruch 6, 7, 8, 9 oder 10, **dadurch gekennzeichnet, dass** das System (J) auf UMTS basiert.

13. Netzwerkknoten (CG) in einem Telekommunikationssystem, wo ein System eines Netzbetreibers vorgesehen ist, Dienste zumindest eines Dienstanbieters einem Teilnehmer zu übertragen und in Gebührenberechnung einzusetzende Gebührendatensätze bereitzustellen, und wo der Dienstanbieter vorgesehen ist, Gebührenberechnungsdaten in Zusammenhang mit einem Dienst zu übertragen,
**dadurch gekennzeichnet, dass**
der Netzwerkknoten Konfigurierungsmittel (1) aufweist, die in den Gebührenberechnungsdaten des Dienstes enthaltene Parameter anhand von vorbestimmten Definitionsregeln derart spezifizieren, dass die Parameterspezifikationen für Bildung eines zu dem Dienst gehörenden Gebührendatensatzes benutzbar sind.

14. Netzwerkknoten nach Anspruch 13, **dadurch gekennzeichnet, dass** die Konfigurierungsmittel (I) vorgesehen sind, die Parameterspezifikationen zu ändern.

15. Netzwerkknoten nach Anspruch 13 oder 14, **dadurch gekennzeichnet, dass** der Netzwerkknoten auch Verarbeitungsmittel (P) aufweist, die einen Gebührendatensatz aus den zu dem Dienst gehörenden Gebührenberechnungsdaten bildet, so dass zumindest ein Teil des Gebührendatensatzes gemäß den Parameterspezifikationen für den Dienst gebildet wird.

16. Netzwerkknoten (CG) in einem Telekommunikationssystem, wo ein System eines Netzbetreibers vorgesehen ist, Dienste zumindest eines Dienstanbieters einem Teilnehmer zu übertragen und wo der Dienstanbieter vorgesehen ist, Gebührenberechnungsdaten in Zusammenhang mit einem Dienst zu übertragen, wobei der Netzwerkknoten Verarbeitungsmittel (P) zum Bilden eines Gebührendatensatzes aus den zu dem Dienst gehörenden Gebührenberechnungsdaten aufweist,
**dadurch gekennzeichnet, dass**
die Verarbeitungsmittel (P) vorgesehen sind,
einen dienstspezifischen Gebührenberechnungsinhalt abzusuchen, der zumindest dienstspezifische Gebührenberechnungsparameter gemäß vorbestimmten Definitionsregeln enthält und indiziert, wie die Parameter aus den Gebührenberechnungsdaten gefunden werden können, und
einen Gebührendatensatz derart zu bilden, dass zumindest ein Teil des Gebührendatensatzes dem Gebührenberechungsinhalt entspricht.

17. Netzwerkknoten (CG) nach einem der Ansprüche 13 bis 16, **dadurch gekennzeichnet, dass** die Mittel (I, P) durch Softwarenroutinen implementiert werden.

## Revendications

1. Procédé permettant la facturation spécifique de services dans un système de télécommunications, dans lequel un système d'un opérateur réseau transmet des services d'au moins un fournisseur de services à un abonné, et établit un relevé détaillé des communications destiné à être utilisé dans la facturation et contenant au moins un paramètre de facturation et la valeur de celui-ci, **caractérisé en ce que en ce que** le procédé comprend au moins les étapes suivantes consistant à :
déterminer des règles pour définir des paramètres de facturation,
déterminer, au moyen des règles de définition, un contenu de facturation pour au moins un service, le contenu incluant au moins un paramètre de facturation spécifique à un service et indiquer comment le paramètre est retrouvé à partir des données de facturation transmises pendant l'utilisation du service, et
stocker le contenu de facturation dans le système de télécommunications de sorte qu'il soit accessible par le système de l'opérateur réseau.

2. Procédé selon la revendication 1, **caractérisé en ce que** le procédé comprend également une étape d'établissement, à partir des données de facturation, d'un relevé détaillé des communications, qui contient au moins une partie spécifique à un service comprenant des paramètres de facturation spécifique à un service et leurs valeurs définies dans le contenu de facturation.

3. Procédé selon la revendication 1 ou 2, **caractérisé en ce que** le procédé comprend également les étapes consistant à :
déterminer au moins un ensemble de paramètres de facturation, et sélectionner les paramètres de facturation destinés à être utilisés dans le contenu de facturation à partir de l'ensemble de paramètres de facturation.

4. Procédé selon l'une des revendications 1, 2 ou 3, **caractérisé en ce qu'**il comprend une étape consistant à déterminer un contenu de facturation pour un service.

5. Procédé selon l'une des revendications 1, 2 ou 3, **caractérisé en ce qu'**il comprend une étape consistant à déterminer un contenu de facturation pour un type de service, et à indiquer le type de service dans les données de facturation.

6. Système de télécommunications (J) comprenant
un système d'un fournisseur de services (PJ) destiné à transmettre au moins un service à un abonné et à fournir des données de facturation relative au service, et
un système d'un opérateur réseau (VJ) destiné à transmettre le service du système à partir du système du fournisseur de services à l'abonné du service, et à fournir un relevé détaillé de communications destiné à être utilisé dans la facturation de l'abonné au moyen des données de facturation, et
une mémoire (M) pour stocker différentes caractéristiques,
**caractérisé en ce que**
le système de l'opérateur réseau (VJ) comprend une interface (I) destinée à stocker dans la mémoire (M) un contenu de facturation spécifique à un service (LS), qui détermine au moins un paramètre de facturation spécifique à un service provenant des données de facturation selon des règles de définition prédéterminées, et indique comment retrouver le paramètre de facturation à partir des données de facturation.

7. Système selon la revendication 6, **caractérisé en ce que** le système de l'opérateur réseau (VJ) est agencé pour utiliser les caractéristiques du contenu de facturation en établissant un relevé détaillé de communications à partir des données de facturation relative au service.

8. Système selon la revendication 6, **caractérisé en ce que** le système de l'opérateur réseau (VJ) est agencé pour établir un relevé détaillé de communications (CDR) pour le service à partir de données standard (1) contenant les mêmes paramètres pour tous les services, et à partir de données spécifique à un service (2) selon le contenu de facturation défini pour le service.

9. Système selon l'une des revendications 6, 7 ou 8, **caractérisé en ce que** l'interface (I) est également agencée de manière à modifier les caractéristiques du contenu de facturation.

10. Système selon l'une des revendications 6, 7, 8 ou 9, **caractérisé en ce que** l'interface (I) est également agencée pour vérifier, en connexion avec ladite mémoire, si les caractéristiques des paramètres sont conformes aux règles de définition.

11. Système selon l'une des revendications 6, 7, 8, 9 ou 10, **caractérisé en ce que** le système (J) est basé sur un système GPRS.

12. Système selon l'une des revendications 6, 7, 8, 9 ou 10, **caractérisé en ce que** le système (J) est basé sur un système UMTS.

13. Noeud de réseau (CG) dans un système de télécommunications dans le quel un système d'un opérateur réseau est agencé pour transmettre des services d'au moins un fournisseur de services à un abonné et pour fournir des relevés détaillés de communications utilisés dans la facturation, et dans lequel le fournisseur de services est agencé pour transmettre des données de facturation en connexion avec un service,
**caractérisé en ce que**
le noeud de réseau comprend des moyens de configuration (I) destinés à spécifier des paramètres contenus dans les données de facturation de service au moyen de règles de définition prédéterminées de telle sorte que les caractéristiques des paramètres soient utilisables pour établir un relevé détaillé de communications relatif au service.

14. Noeud de réseau selon la revendication 13, **caractérisé en ce que** les moyens de configuration (I) sont agencés de manière à modifier les caractéristiques des paramètres.

15. Noeud de réseau selon la revendication 13 ou 14, **caractérisé en ce que** le noeud de réseau comprend également des moyens de traitement (P) de manière à établir un relevé détaillé de communications à partir des données de facturation relatives au service, de sorte qu'au moins une partie du relevé détaillé de communications est établi selon les caractéristiques des paramètres pour le service.

16. Noeud de réseau (CG) dans un système de télécommunications, dans lequel un système d'opérateur réseau est agencé pour transmettre des services d'au moins un fournisseur de services à un abonné, et dans lequel le fournisseur de services est agencé pour transmettre des données de facturation en connexion avec un service, le noeud de réseau comprenant des moyens de traitement (P) destiné à établir un relevé détaillé de communications à partir des données de facturation relatives au service,
**caractérisé en ce que**
les moyens de traitement (P) sont agencés pour
retrouver un contenu de facturation spécifique à un service incluant au moins des paramètres de facturation spécifiques à un service selon des règles de définition prédéterminées, et indiquer comment les paramètres peuvent être retrouvés à partir des données de facturation, et
établir un relevé détaillé de communications de telle sorte qu'au moins une partir du relevé détaillé de communications soit conforme au contenu de facturation.

17. Noeud de réseau (CG) selon l'une quelconque des revendications 13 à 16, **caractérisé en ce que** les moyens (I, P) sont exécutés par des programmes logiciels.
